# EUROPÄISCHE PATENTSCHRIFT

(11) **EP 2 740 391 B1**
(45) Veröffentlichungstag und Bekanntmachung des Hinweises auf die Patenterteilung: **18.05.2016**
(21) Anmeldenummer: 13194877.0
(22) Anmeldetag: 28.11.2013
(51) Int. Cl.: A47J 31/44

(54) **Höhenverstellbare und arretierbare Auslaufeinheit für einen Getränkeautomaten**
Height-adjustable and lockable outlet unit for a beverage machine
Goulotte verrouillable et réglable en hauteur pour un distributeur de boissons

(30) Priorität: 06.12.2012 DE 102012222407
(43) Veröffentlichungstag der Anmeldung: 11.06.2014
(73) Patentinhaber: BSH Hausgeräte GmbH, 81739 München (DE)
(72) Erfinder: Breucker, Manfred, 83308 Heiligkreuz (DE); Franzke, Peter, 83229 Sachrang/Aschau (DE); Huber, Michael, 6341 Ebbs (AT)

(56) Entgegenhaltungen:
- EP-A1- 1 563 775
- EP-B1- 1 745 726
- CH-A- 315 281
- DE-U1- 20 017 859
- DE-U1- 29 810 291

## Beschreibung

Die vorliegende Erfindung betrifft eine höhenverstellbare und arretierbare Auslaufeinheit für einen Getränkeautomaten gemäß dem Oberbegriff des Anspruchs 1. Die Erfindung betrifft außerdem einen mit einer derartigen Auslaufeinheit ausgestatteten Getränkeautomaten.

Bei Kaffeevollautomaten mit höhenverstellbarer Auslaufeinheit ist die mechanische Anbindung der Auslauföffnung an ein Grundgerät, das heißt ein Gehäuse des Kaffeevollautomaten, einfach und doch stabil auszuführen, um möglichst lange ein einwandfreies Verstellen der Auslaufeinheit gewährleisten zu können.

Aus der EP 1 745 726 B1 ist beispielsweise ein Kaffeeautomat mit einer höhenverstellbaren und arretierbaren Auslaufeinheit bekannt, die mindestens ein mit einer Kaffeebrüheinrichtung in fluidleitender Verbindung stehendes Kaffeeauslaufrohr besitzt und gegenüber einem Tassenpodest stufenlos höhenverstellbar und mit einer Arretierung arretierbar ist. Die Auslaufeinheit ist dabei mittels eines Längskugellagers als erstes Lagerelement, das eine vertikale Längskugellagerachse als zweites Lagerelement umgreift, an einem Gehäuse des Kaffeeautomaten gelagert, wobei eines der beiden Lagerelemente mit der Auslaufeinheit verbunden ist und das andere die beiden Lagerelemente mit dem Gehäuse des Kaffeeautomaten in fester Verbindung steht. Durch die kugelgelagerte Höhenverstellung soll insbesondere ein leichtgängiges Verstellen der Auslaufeinheit auch langfristig ermöglicht werden.

Aus der EP 1 563 775 A1 ist eine parallele Längsführung für einen höhenverstellbaren Getränkeauslauf einer Getränkemaschine, mit einem ersten und einem zweiten, parallel zueinander angeordneten, langgestreckten Führungselement, wobei das erste Führungselement in einer ersten Ausnehmung geführt ist und das zweite Führungselement in einer zweiten Ausnehmung aufgenommen und mit einer Arretiereinrichtung versehen ist, die eine Betätigungseinrichtung für eine relative Verdrehung des zweiten Führungselementes und der zweiten Ausnehmung aufweist. derart, dass in einer ersten Verdrehstellung eine axiale, relative Gleitbewegung zwischen dem zweiten Führungselement und der Ausnehmung gestattet ist und in einer zweiten Verdrehstellung sich das zweite Führungselement in der zweiten Ausnehmung verklemmt.

Nachteilig bei den bisher bekannten höhenverstellbaren Auslaufeinheiten ist jedoch deren Instabilität bei größeren Ausläufen und zudem größeren Verfahrwegen. Hierdurch kann insbesondere eine lediglich befriedigende Haptik beim Verstellen der Auslaufeinheit erreicht werden, wobei diese Haptik jedoch als Wertigkeit für das gesamte Produkt vom Kunden wahrgenommen wird und dadurch eigentlich einen hohen Stellenwert eingeräumt bekommen sollte.

Die vorliegende Erfindung beschäftigt sich mit dem Problem, für eine höhenverstellbare und arretierbare Auslaufeinheit für einen Getränkeautomaten der gattungsgemäßen Art eine verbesserte Ausführungsform anzugeben, die insbesondere leichtgängig und einfach aufgebaut ist und eine Fertigung eines Getränkeautomaten vereinfacht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine höhenverstellbare und arretierbare Auslaufeinheit für einen Getränkeautomaten, die einen Grundrahmen besitzt, mit zwei Führungsschienen zu versehen, an welchen ein Schlitten mit einem Getränkeauslauf entlang geführt werden kann und zudem die gesamte Auslaufeinheit als separates Modul auszubilden, so dass diese bereits vor dem Einbau in den eigentlichen Getränkeautomaten vormontiert und getestet werden kann. Die erfindungsgemäße höhenverstellbare und arretierbare Auslaufeinheit besitzt dabei einen Grundrahmen, in bzw. an welchem zwei parallele Führungsschienen fixiert sind, beispielsweise ist hierbei der Grundrahmen aus Kunststoff ausgebildet, in welchen die Führungsschienen eingebettet sind. Der Schlitten ist über zumindest ein Fixierelement an einer frei wählbaren Position arretierbar. Zusätzlich umfasst die Auslaufeinheit den zuvor erwähnten Schlitten, der über die Führungsbuchsen gleitend an den beiden Führungsschienen geführt ist. Zur Arretierung des Schlittens in einer gewissen Höhe ist zumindest ein Fixierelement vorgesehen, über welches der Schlitten an einer frei wählbaren Position entlang der Führungsschienen selbsttätig festlegbar ist. Erfindungsgemäß ist die gesamte Auslaufeinheit als vormontiertes Modul ausgebildet, so dass diese bereits in einer Vormontage komplett zusammengebaut und auch getestet werden kann, wodurch sich der Zusammenbau des Getränkeautomaten vereinfacht. Durch die beiden Führungsschienen im Grundrahmen ist zudem ein äußerst exaktes und grifffestes Verstellen der höhenverstellbaren Auslaufeinheit, das heißt hierbei insbesondere des Schlittens entlang der Führungsschienen möglich, was durch eine entsprechende Haptik vom Kunden wahrgenommen wird. Da diese Haptik gleichzeitig mit der Wertigkeit des gesamten Geräts vom Kunden in Verbindung gebracht wird, kann hierdurch ein besonderer Vorteil erhielt werden, da der Kunde beim Bewegen des Schlittens an der erfindungsgemäßen Auslaufeinheit sofort das Gefühl einer hohen Wertigkeit bekommt, welches ihm nicht nur die Kaufentscheidung erleichtert, sondern ihn generell positiv hinsichtlich der Qualitätserwartung beeinflusst.

Bei einer vorteilhaften Weiterbildung der erfindungsgemäßen Lösung sind die Führungsbuchsen derart am Schlitten gelagert, dass sie einen Toleranzausgleich ermöglichen. Ein derartiger Toleranzausgleich kann beispielsweise durch nicht exakt parallel verlaufende Führungsschienen erforderlich sein, wobei die Führungsbuchsen dabei erfindungsgemäß in der Lage sind, zumindest kleinere Abweichungen von der Parallelität problemlos auszugleichen, ohne dass dies dem Benutzer mittels eines entsprechenden haptischen Missempfindens angezeigt wird. Zum Toleranzausgleich sind die Führungsbuchsen drehbar und/oder verschiebbar am Schlitten gelagert und dadurch in der Lage, eine Veränderung des Abstandes der beiden Führungsschienen auszugleichen und gleichzeitig ein Verklemmen der Führungsbuchsen an den Führungsschienen, was zu einem Verklemmen des Schlittens führen würde, zu verhindern. Derartige Führungsbuchsen können beispielsweise aus leicht gleitfähigen Kunststoffen hergestellt sein und in entsprechenden Aufnahmen am Schlitten gehalten werden. Beispielsweise können hierbei insgesamt vier Führungsbuchsen vorgesehen sein, von denen jeweils zwei einer Führungsschiene zugeordnet sind, wobei die beiden Führungsbuchsen einer Führungsschiene quer zu dieser verstellbar sind oder um die Achse der Führungsschiene verdrehbar sind. Die Querverstellbarkeit der beiden koaxial zueinander angeordneten Führungsbuchsen ermöglicht dabei den Ausgleich einer Abstandsänderung zwischen den beiden Führungsschienen, ohne dass hierbei der Schlitten verklemmen würde. Durch ein Verdrehen der Führungsbuchsen wiederum lassen sich Toleranzen hinsichtlich der Achse der jeweiligen Führungsschiene ausgleichen und zwar in nahezu frei wählbarer radialer Richtung. Durch die beiden Führungsschienen kann die Führung des Schlittens im Vergleich zum Stand der Technik, bei welchem lediglich eine einzige Stange vorgesehen ist, deutlich exakter bewirkt werden, was sich auf die Leichtgängigkeit der Bewegung des Schlittens entlang der Führungsschienen positiv auswirkt.

Bei einer weiteren vorteilhaften Ausführungsform der erfindungsgemäßen Lösung sind die Führungsbuchsen und die Führungsschienen benachbart zu einem Krafteinleitungspunkt angeordnet, an welchem der Schlitten von einem Benutzer angefasst wird, um ihn zu bewegen. Hierbei gilt, je näher die Führungsbuchsen und die Führungsschienen am Krafteinleitungspunkt des Benutzers sind, desto geringer ist das in den Schlitten eingeleitete Moment und desto leichtgängiger kann dieser entlang der Führungsschienen geführt werden. Es ist somit neben der eigentlichen Lagerung des Schlittens auch darauf zu achten, dass ein entsprechendes Griffelement außen an der Auslaufeinheit, das heißt außen am Schlitten, so platziert wird, dass der Benutzer die Verstellbewegung des Schlittens und damit die Höhenverstellung der Auslaufeinheit über den Griff bewirkt und damit an einen besonders günstigen Krafteinleitungspunkt.

Zweckmäßig kann darüber hinaus eine Antriebseinrichtung zum elektrischen Verstellen des Schlittens entlang der Führungsschienen vorgesehen sein. Eine derartige elektrische Antriebseinrichtung steigert den Bedienkomfort, da diese beispielsweise zusammen mit einem Sensor eine Höhe des auf einem Tassenpodest abgestellten Behälters erkennen und die Auslaufeinheit entsprechend ihrer Höhe ausrichten kann.

Mit der erfindungsgemäßen Auslaufeinheit ist es somit möglich, diese qualitativ hochwertig, konstruktiv aber einfach zu fertigen und dadurch insbesondere dem Kunden eine haptisch hochwertige Lösung bei vergleichsweise geringen Kosten anbieten zu können. Von weiterem großem Vorteil bei der erfindungsgemäßen Auslaufeinheit ist, dass diese als separates Modul vorgefertigt ist und damit separat montiert und auch separat getestet werden kann, um dann in vollfunktionsfähigem Zustand an dem jeweiligen Getränkeautomat angebaut werden zu können. Hierdurch kann der Fertigungsprozess für den Getränkeautomaten aufgesplittet werden, was wiederum Vorteile hinsichtlich der Fertigungskette bildet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen Getränkeautomaten mit einer erfindungsgemäßen Auslaufeinheit,
- Fig. 2: eine Detaildarstellung der erfindungsgemäßen Auslaufeinheit.

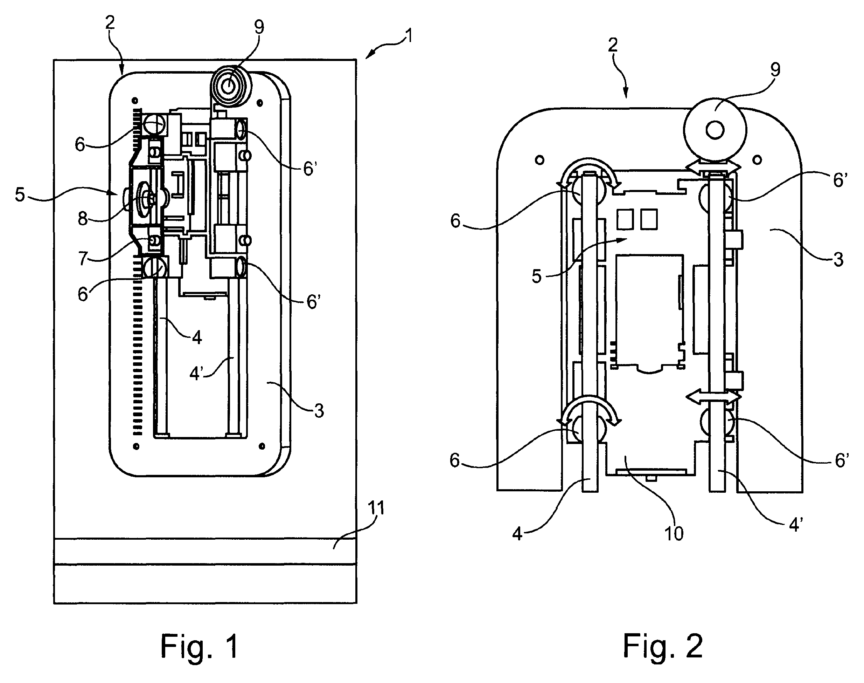

Entsprechend der Figur 1, weist ein erfindungsgemäßer Getränkeautomat 1, der beispielsweise als Kaffeevollautomat ausgebildet sein kann, und der lediglich in einem kleinen Frontbereich dargestellt ist, eine erfindungsgemäße Auslaufeinheit 2 auf, die höhenverstellbar ist und zugleich in unterschiedlichen und nahezu frei beliebigen Höhen fixiert werden kann. Die erfindungsgemäße höhenverstellbare und arretierbare Auslaufeinheit 2 besitzt einen Grundrahmen 3 (vergleiche auch Figur 2), in bzw. an welchem zwei parallele Führungsschienen 4, 4' befestigt sind. An diesen Führungsschienen 4, 4' ist in Hochrichtung ein Schlitten 5 über Führungsbuchsen 6, 6' gleitend geführt. An dem Schlitten 5 kann später ein entsprechendes Auslaufrohr bzw. generell ein Auslauf für die auszuschenkenden Getränke befestigt werden. Der Schlitten 5 der Auslaufeinheit 4 ist dabei höhenverstellbar gegenüber einem Tassenpodest 11, auf welchem üblicherweise Getränkebehälter, insbesondere Tassen, abgestellt werden. Ebenfalls vorgesehen ist zumindest ein Fixierelement 7, über welches der Schlitten 5 an einer frei wählbaren Position entlang der Führungsschienen 4, 4' selbsttätig arretierbar ist. Die Arretierung des Fixierelementes 7 und damit des Schlittens 5 erfolgt selbsttätig. Generell ist die gesamte Auslaufeinheit 2 als vormontiertes Modul ausgebildet, so dass sie mit den zuvor genannten Bauteilen komplett montiert am Getränkeautomaten 1 angebaut werden kann.

Die Führungsbuchsen 6, 6' sind dabei derart am Schlitten 5 gelagert, dass sie einen Toleranzausgleich, insbesondere hinsichtlich der Fertigungsgenauigkeit des Rahmens 3 und/oder der Führungsschienen 4, 4' ermöglichen. Beispielsweise können die Führungsbuchsen 6 drehbar um die Achse der Führungsschiene 4 gelagert sein, wogegen die Führungsbuchsen 6' in Querrichtung zur Achse der Führungsschiene 4 verstellbar am Schlitten 5 gelagert sind und dadurch eine Toleranz bezüglich des Abstandes der beiden Führungsschienen 4, 4' ermöglichen und zudem gleichzeitig ein Verklemmen an den Führungsschienen 4, 4' zuverlässig verhindern.

Das wenigstens eine Fixierelement 7 kann beispielsweise auch in der Art eines Reibkörpers ausgebildet sein, der mittels einer Feder- oder Magnetkraft gegen die jeweils zugehörige Führungsschiene 4, 4' vorgespannt ist und dadurch den Schlitten 5 selbsttätig in einer vordefinierten Höhe fixiert. Auch denkbar ist eine Ausbildung des Fixierelementes 7 als Rotationsbremse 8 oder als Rollfeder 9, die die Gewichtskraft der beweglichen Bauteile, das heißt also beispielsweise des Schlittens 5 und der daran befestigten Teile, auszugleichen vermag.

Generell sollten die Führungsbuchsen 6, 6' und die Führungsschienen 4, 4' benachbart zu einem Krafteinleitungspunkt, der beispielhaft in Figur 2 eingezeichnet und mit 10 bezeichnet ist, angeordnet sein, wobei der Schlitten 5 von einem Benutzer an diesem Krafteinleitungspunkt 10 angefasst wird.

Betrachtet man insbesondere die Figur 2, so kann man erkennen, dass insgesamt vier Führungsbuchsen 6, 6' vorgesehen sind, von denen jeweils zwei Führungsbuchsen 6 der Führungsschiene 4 und die zwei anderen Führungsbuchsen 6' der Führungsschiene 4' zugeordnet sind. Die Führungsbuchsen 6' sind dabei quer verschieblich zur Führungsschiene 4' gelagert, wogegen die Führungsbuchsen 6 verdrehbar um die Führungsschiene 4 gelagert sind.

Ebenfalls vorgesehen sein kann eine nicht näher bezeichnete Antriebseinrichtung zum elektrischen Verstellen des Schlittens 5 entlang der Führungsschienen 4, 4'. Ein mit einer derartigen Auslaufeinheit 2 ausgestatteter Getränkeautomat 1 kann darüber hinaus als Kaffeevollautomat ausgebildet sein.

Mit der erfindungsgemäßen Auslaufeinheit 2 lassen sich mehrere Vorteile realisieren:
Zum einen kann aufgrund der zwei parallelen Führungsschienen 4, 4' eine äußerst exakte und klemmfreie Führung des Schlittens 5 und damit eine Höhenverstellung desselben erfolgen, was im Vergleich zum Stand der Technik, bei welcher üblicherweise lediglich eine Führungsschiene eingesetzt wird, einen wesentlichen Vorteil darstellt. Auch bei höheren Verstellwegen oder größeren Auslaufgeometrien kann durch die zwei Führungsschienen 4, 4' eine höhere Stabilität und damit dem Kunden eine verbesserte Haptik angeboten werden, was dieser mit einer höheren Wertigkeit gleichsetzt. Durch die modulare Bauweise der Auslaufeinheit 2 kann diese darüber hinaus separat vormontiert werden, wodurch weniger Ausfälle durch Montagefehler zu befürchten sind und zudem die Auslaufeinheit 2 vor dem eigentlichen Einbau in den Getränkeautomaten 1 getestet werden kann. Durch die Verwendung von Standardteilen hinsichtlich des Schlittens 5 bzw. der Führungsschienen 4, 4' kann die gesamte Auslaufeinheit 2 darüber hinaus kostengünstig aber dennoch qualitativ äußerst hochwertig aufgebaut werden, wodurch zusätzlich eine lange Lebensdauer gewährleistet werden kann.

### Bezugszeichenliste

- 1: Getränkeautomat
- 2: Auslaufeinheit
- 3: Grundrahmen
- 4: Führungsschiene
- 5: Schlitten
- 6: Führungsbuchse
- 7: Fixierelement
- 8: Rotationsbremse
- 9: Rollfeder
- 10: Krafteinleitungspunkt
- 11: Tassenpodest

## Patentansprüche

1. Höhenverstellbare und arretierbare Auslaufeinheit (2) für einen Getränkeautomaten (1), insbesondere für einen Kaffeeautomaten, die einen Grundrahmen (3) besitzt, in/an welchem zwei parallele Führungsschienen (4,4') fixiert sind, und die ein Schlitten (5) umfasst, der über Führungsbuchsen (6,6') gleitend an den beiden Führungsschienen (4,4') geführt ist, wobei der Schlitten (5) über zumindest ein Fixierelement (7) an einer frei wählbaren Position entlang der Führungsschienen (4,4') selbsttätig arretierbar ist, und **dadurch gekennzeichnet, dass** die Auslaufeinheit (2) als vormontiertes Modul ausgebildet ist, das in einer Vormontage komplett zusammengebaut werden kann.

2. Auslaufeinheit nach Anspruch 1,
**dadurch gekennzeichnet,**
**dass** die Führungsbuchsen (6,6') derart am Schlitten (5) gelagert sind, dass sie einen Toleranzausgleich ermöglichen.

3. Auslaufeinheit nach Anspruch 2,
**dadurch gekennzeichnet,**
**dass** die Führungsbuchsen (6,6') drehbar und/oder verschiebbar am Schlitten (5) gelagert sind und dadurch eine Toleranz bezüglich des Abstandes der beiden Führungsschienen (4,4') ermöglichen und gleichzeitig ein Verklemmen an den Führungsschienen (4,4') verhindern.

4. Auslaufeinheit nach einem der vorhergehenden Ansprüche,
**dadurch gekennzeichnet,**
**dass** das wenigstens eine Fixierelement (7) als Reibkörper ausgebildet ist, der mit Magnet- oder Federkraft gegen die Führungsschiene (4,4') vorspannbar ist oder als Rotationsbremse (8) oder als Rollfeder (9), die die Gewichtskraft des Schlittens (5) und den damit verbundenen Teile ausgleicht.

5. Auslaufeinheit nach einem der vorhergehenden Ansprüche,
**dadurch gekennzeichnet,**
**dass** die Führungsbuchsen (6,6') und die Führungsschienen (4,4') benachbart zu einem Krafteinleitungspunkt (10) angeordnet sind, an welchem der Schlitten (5) von einem Benutzer angefasst wird, um ihn zu bewegen.

6. Auslaufeinheit nach einem der vorhergehenden Ansprüche,
**dadurch gekennzeichnet,**
**dass** vier Führungsbuchsen (6,6') vorgesehen sind, von denen jeweils zwei einer Führungsschiene (4,4') zugeordnet sind, wobei die beiden Führungsbuchsen (6,6') einer Führungsschiene (4,4') quer zu dieser verstellbar sind oder um die Achse der Führungsschiene (4,4') verdrehbar sind.

7. Auslaufeinheit nach einem der Ansprüche 1 bis 6,
**dadurch gekennzeichnet,**
**dass** einen Antriebseinrichtung zum elektrischen Verstellen des Schlittens (5) entlang der Führungsschienen (4,4') vorgesehen ist.

8. Getränkeautomat (1) mit einer gegenüber einem Tassenpodest (11) höhenverstellbaren und arretierbaren Auslaufeinheit (5) nach einem der vorhergehenden Ansprüche.

9. Getränkeautomat nach Anspruch 8,
**dadurch gekennzeichnet,**
**dass** der Getränkeautomat als Kaffeevollautomat ausgebildet ist.

## Claims

1. Height-adjustable and lockable outlet unit (2) for a beverage machine (1), in particular for an automatic coffee maker, which has a basic frame (3), in/on which two parallel guide rails (4, 4') are fixed, and which comprises a sliding carriage (5), which is guided in a sliding manner via guide bushing (6, 6') on the two guide rails (4, 4'), wherein the sliding carriage (5) can be automatically stopped at a freely selectable position along the guide rails (4, 4') by way of at least one fixing element (7), and **characterised in that** the outlet unit (2) is embodied as a preassembled module, which can be completely reassembled in a preassembly.

2. Outlet unit according to claim 1,
**characterised in that**
the guide bushings (6, 6') are supported on the sliding carriage (5) such that they allow for tolerance compensation.

3. Outlet unit according to claim 2,
**characterised in that**
the guide bushings (6, 6') are supported in a rotatable and/or displaceable manner on the sliding carriage (5) and as a result allow for a tolerance in respect of the distance between the two guide rails (4, 4') and at the same time prevent a jamming onto the guide rails (4, 4').

4. Outlet unit according to one of the preceding claims,
**characterised in that**
the at least one fixing element (7) is embodied as a friction body, which can be prestressed with magnetic or spring force against the guide rails (4, 4'), or as a rotation brake (8) or as a roller spring (9), which compensates for the weight of the sliding carriage (5) and the parts connected thereto.

5. Outlet unit according to one of the preceding claims, **characterised in that**
the guide bushings (6, 6') and the guide rails (4, 4') are arranged adjacent to a force transmission point (10), at which the sliding carriage (5) is handled by a user in order to move the same.

6. Outlet unit according to one of the preceding claims,
**characterised in that**
four guide bushings (6, 6') are provided, of which in each case two are assigned to a guide rail (4, 4'), wherein the two guide bushings (6, 6') of a guide rail (4, 4') are adjustable perpendicular hereto or can be rotated about the axis of the guide rail (4, 4').

7. Outlet unit according to one of claims 1 to 6,
**characterised in that**
a drive facility is provided to electrically adjust the sliding carriage (5) along the guide rails (4, 4').

8. Beverage machine (1) having a height-adjustable and lockable outlet unit (5) opposite a cup stand (11) according to one of the preceding claims.

9. Beverage machine according to claim 8,
**characterised in that**
the beverage machine is embodied as an automatic coffee maker.

## Revendications

1. Unité d'écoulement (2), réglable en hauteur et pouvant être arrêtée, pour un distributeur de boissons (1), notamment pour un distributeur automatique de café, laquelle unité d'écoulement possède un cadre de base (3) dans/sur lequel sont fixés deux rails de guidage parallèles (4, 4'), et laquelle comprend un chariot (5) qui est guidé de manière coulissante sur les deux rails de guidage (4, 4') par l'intermédiaire de douilles de guidage (6, 6'), le chariot (5) pouvant être arrêté automatiquement le long des rails de guidage (4, 4') sur une position librement sélectionnable par l'intermédiaire d'au moins un élément de fixation (7), et **caractérisée en ce que** l'unité d'écoulement (2) est réalisée comme module pré-monté qui peut être complètement assemblé au cours d'un pré-montage.

2. Unité d'écoulement selon la revendication 1,
**caractérisée en ce**
**que** les douilles de guidage (6, 6') sont logées de telle manière sur le chariot (5) qu'elles permettent une compensation de tolérance.

3. Unité d'écoulement selon la revendication 2,
**caractérisée en ce**
**que** les douilles de guidage (6, 6') sont logées de manière rotative et/ou déplaçable sur le chariot (5) et en ce qu'elles permettent ainsi une tolérance par rapport à l'écart entre les deux rails de guidage (4, 4') et empêchent en même temps un blocage sur les rails de guidage (4, 4').

4. Unité d'écoulement selon l'une quelconque des revendications précédentes,
**caractérisée en ce**
**que** l'au moins un élément de fixation (7) est réalisé comme corps de frottement qui peut être précontraint contre le rail de guidage (4, 4') par force magnétique ou force de ressort, ou comme frein à rotation (8) ou comme ressort à crosse (9) qui compense la force de poids du chariot (5) et les pièces qui y sont reliées.

5. Unité d'écoulement selon l'une quelconque des revendications précédentes,
**caractérisée en ce**
**que** les douilles de guidage (6, 6') et les rails de guidage (4, 4') sont disposés de manière avoisinante à un point d'introduction de force (10), auquel le chariot est saisi par un utilisateur afin de le déplacer.

6. Unité d'écoulement selon l'une quelconque des revendications précédentes,
**caractérisée en ce**
**que** quatre douilles de guidage (6, 6') sont ménagées dont respectivement deux sont attribuées à un rail de guidage (4, 4'), les deux douilles de guidage (6, 6') d'un rail de guidage (4, 4') étant réglables transversalement à celui-ci ou étant rotatives autour de l'axe du rail de guidage (4, 4').

7. Unité d'écoulement selon l'une quelconque des revendications 1 à 6,
**caractérisée en ce**
**qu'**un dispositif d'entraînement est ménagé pour le réglage électrique du chariot (5) le long des rails de guidage (4, 4').

8. Distributeur de boissons (1) comprenant une unité d'écoulement (5) réglable en hauteur et pouvant être arrêtée par rapport à un support pour tasse (11), selon l'une quelconque des revendications précédentes.

9. Distributeur de boissons selon la revendication 8,
**caractérisé en ce**
**que** le distributeur de boissons est réalisé comme distributeur de café entièrement automatique.
